Europäisches Patentamt

European Patent Office

Office européen des brevets

(11) Veröffentlichungsnummer: **0 408 127 A2**

## (12) EUROPÄISCHE PATENTANMELDUNG

(21) Anmeldenummer: **90201808.4**

(22) Anmeldetag: **06.07.90**

(51) Int. Cl.5: **F04B 9/06, A47J 31/36**

(30) Priorität: **12.07.89 DE 3922916**

(43) Veröffentlichungstag der Anmeldung:
**16.01.91 Patentblatt 91/03**

(84) Benannte Vertragsstaaten:
**DE ES FR GB IT**

(71) Anmelder: **Philips Patentverwaltung GmbH**
**Wendenstrasse 35 Postfach 10 51 49**
**D-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **ES**

(72) Erfinder: **Bertram, Leo**
**Am Sender 10**
**D-5190 Stolberg(DE)**
Erfinder: **Schemmann, Hugo, Dr.**
**Zwartebergweg 6**
**Schaesberg(NL)**
Erfinder: **Vermeulen, Arend Jan Wilhelmus**
**Abraham**
**It Heechfean 8**
**NL-9222 NZ Drachtstercompagnie(NL)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Druckpumpe für fliessfähige Medien.**

(57) Druckpumpe für fließfähige Medien, insbesondere für Espressomaschinen, zur Verwendung als Pumpe für höhere Pumpdrücke von 8 bar bis 18 bar, wobei ein Einphasensynchronmotor beim Entspannungshub über den Exzenter einen Energiespeicher (27, 55) lädt und der Energiespeicher beim Kompressionshub den Motor gegen das Kompressionsmoment unterstützt derart, daß die Amplitude des den Motor belastenden Gesamtmomentes, bestehend aus Kolbenmoment und Zusatzmoment des Energiespeichers, während der ersten halben Umdrehung etwa halb so groß ist wie das Moment, das ohne den zusätzlichen Energiespeicher (27, 55) auftreten würde, und während der zweiten halben Umdrehung gleich groß ist wie bei der ersten halben Umdrehung, so daß die während einer Umdrehung auftretende Wechselbelastung auf den Einphasensynchronmotor auf etwa die Hälfte reduziert wird bei gleichbleibender mittlerer Leistung.

Fig.1

EP 0 408 127 A2

# DRUCKPUMPE FÜR FLIESSFÄHIGE MEDIEN

Die Erfindung bezieht sich auf eine Druckpumpe für fließfähige Medien, insbesondere für Espressomaschinen, bei der die auf einen Kolben wirkende Kraft während eines Pumpzyklusses beim Kompressionshub auf einen Maximalwert ansteigt und beim Saughub sehr gering ist, mit einem als Antriebsmotor dienenden zweipoligen Einphasensynchronmotor, der über eine Umdrehung ein von der Rotorstellung und dem Strom abhängiges, stark wechselndes Motormoment aufweist und der über einen Exzenter, der ohne Zwischenschaltung eines Getriebes unmittelbar vom dauermagnetischen Rotor angetrieben wird, den in einem Kolbenraum verschiebbaren Kolben ohne Rückholfeder abwechselnd im Kompressionshub vor und im Entspannungshub zurück bewegt, wobei in der Wand des Kolbenraumes im Pumpengehäuse angeordnete Ein- und Auslaßventile für das Medium vorgesehen sind.

Bei der Espresso-Zubereitung wird Wasser unter hohem Druck durch das Kaffeemehl gepreßt. Zur Erzielung einer guten Espresso-Qualität ist ein Druck von etwa 10 bar erforderlich, dies insbesondere zur Erzeugung der für den Kenner unverzichtbaren "Crema", einer emulsionsartigen Substanz, die an der Oberfläche der Flüssigkeit schwimmt und nur bei hohem Druck aus dem Kaffeemehl gelöst wird.

Es sind elektrisch betriebene Pumpen für die Espresso-Zubereitung bekannt, bei denen ein aus weichmagnetischem Material bestehender Kolben in einer Zylinderspule beweglich ist. Die Spule ist über eine Diode an das Netz angeschlossen, so daß sie während einer Strom-Halbwelle der Versorgungsspannung vom Strom durchflossen ist, während sie während der anderen Strom-Halbwelle stromlos ist. Solange Strom fließt, wird auf den weichmagnetischen Kolben eine Kraft ausgeübt, die diesen gegen eine mechanische Rückholfeder und den Gegendruck des Wassers in einem Kolbenraum beschleunigt. Überschreitet der Druck einen einstellbaren Grenzwert, so öffnet ein Ventil, und das Wasser wird in die sich ebenfalls unter Druck befindliche Heizkammer und von dort aus weiter durch das Kaffeemehl gepreßt. Setzt der Strom aus, so drückt die Rückholfeder den Kolben zurück, der Wasserdruck im Kolbenraum bricht zusammen, und das Auslaßventil schließt wieder. Gleichzeitig öffnet ein Einlaßventil, und neues Wasser kann in den Pumpenraum eindringen. Mit der neuen Halbwelle des Stromes wiederholt sich das Spiel.

Der elektromechanische Wirkungsgrad einer derartigen Anordnung ist schlecht. Demzufolge ist die erforderliche aufgenommene Leistung hoch und das Leistungsvolumen niedrig. Dies führt dazu, daß die bekannten Pumpenaggregate ein großes Bauvolumen haben und wegen des damit verbundenen Materialaufwandes nicht wirtschaftlich zu fertigen sind.

Aus der DE-PS 34 19 177 (PHD 84-079) ist eine Druckpumpe bekannt, die von einem Einphasensynchronmotor angetrieben wird und über eine Exzenter- oder Kurbeltriebanordnung einen Kolben bewegt. Bei dieser Pumpe, die bei einer Mundusche zum Einsatz kommt, wird ein Einphasensynchronmotor von etwa 10 W mit dauermagnetischem Läufer verwendet, der den Kolben antreibt. Das Rückholen des Kolbens beim Entspannungshub bewirkt der Motor. Eine ausgeführte Konstruktion dieser Druckpumpe arbeitet mit Klappenventilen. Mit dieser Munddduschen-Pumpe läßt sich ein Überdruck von etwa 2 bar erreichen.

Aus der DE-PS 35 37 297 ist eine Dosierpumpe bekannt, die von einem elektromotorischen Antrieb mit einem Untersetzungsgetriebe betätigt wird. Der Kompressionshub des Pumpenstößels erfolgt über eine Exzenter- oder Kurvenscheibe, während der Entspannungshub mit Hilfe einer Rückholfeder geschieht. Beim Kompressionshub wird die Rückholfeder gespannt; die stärkste Federbelastung des Motors tritt auf, wenn der Pumpenstößel maximal ausgelenkt ist. Hinzu kommt noch die Betriebsbelastung der Pumpe. Während des Entspannungshubes wird der Motor vom Pumpenstößel nicht belastet; er wird vielmehr durch die Rückholfeder geschoben. Aufgrund des Untersetzungsgetriebes erfährt der Motor während einer Anzahl von Umdrehungen beim Kompressionshub eine allmählich zunehmende Belastung, wogegen er beim Rücklauf des Stößels während einiger Umdrehungen vom Kolben nicht belastet wird. Der Motor muß auf die Leistung ausgelegt werden, die am Ende des Kompressionshubes auftritt und außer durch die Pumpbelastung wesentlich durch die Rückholfeder bestimmt wird. Diese hohe Motorleistung wird während des Rücklaufes nicht benötigt. Die Pumpe nach der DE-PS 35 37 297 ist zusätzlich mit einer Anordnung zur Speicherung mechanischer Energie in Form von Tellerfedern ausgestattet, die eine entgegen der Kraft der Rückholfeder gerichtete Kraft auf den Pumpenstößel übertagen können und die im Verlauf des Entspannungshubes des Pumpenstößels durch die Motorkurvenscheibe auf einen Zustand höherer potentieller Energie geladen wird. Während des Kompressionshubes gegen die Rückholfeder unterstützt die Tellerfeder den Motor. Das Gegeneinander-Arbeiten von Rückholfedern und Energiespeicherfeder mindert die Leistung jedes der Federsysteme.

Es ist Aufgabe der Erfindung, eine elektromechanische Druckpumpe zur Förderung von Flüssigkeiten zu realisieren, die kleinbauend ist und wirtschaftlich aus wenigen Teilen hergestellt werden kann.

Die gestellte Aufgabe ist erfindungsgemäß gelöst durch die Verwendung als Pumpe für höhere Pumpdrücke von 8 bar bis 18 bar, wobei der Motor beim Entspannungshub über den Exzenter einen Energiespeicher lädt und der Energiespeicher beim Kompressionshub den Motor gegen das Kompressionsmoment unterstützt derart, daß die Amplitude des den Motor belastenden Gesamtmomentes, bestehend aus Kolbenmoment und Zusatzmoment des Eneregiespeichers, während der ersten halben Umdrehung etwa halb so groß ist wie das Moment, das ohne den zusätzlichen Energiespeicher auftreten würde, und während der zweiten halben Umdrehung gleich so groß ist wie bei der ersten halben Umdrehung, so daß die während einer Umdrehung auftretende Wechselbelastung auf den Einphasensynchronmotor auf etwa die Hälfte reduziert wird bei gleichbleibender mittlerer Leistung.

Das von dem Energiespeicher erzeugte Zusatzmoment liegt in Gegenphase zum Kompressionsmoment. Dadurch halbiert sich die Amplitude des insgesamt auf den Motor rückwirkenden Momentes aus Kompressionsmoment und Speicherfedermoment bei gleichbleibender mittlerer Leistung. Da der Motor beim Rücklauf des Kolbens mit dem Speicherfedermoment belastet ist, erfolgt eine Symmetrierung der Belastung des Motors über eine Umdrehung, die dem dynamischen Verhalten des Synchronmotors angepaßt ist. Bei Verwendung der den Kompressionshub unterstützenden Speicherfedern wird die während einer Umdrehung auftretende Spitzenbelastung des Synchronmotors also halbiert, obwohl die im Mittel von dem Motor abzugebende Leistung unverändert bleibt. Der Abbau der Lastspitzen und die gleichmäßigere Verteilung der Belastung auf die beiden Netz-Halbwellen verhindern das Abkippen des Motors aufgrund von Pulsbelastungen.

Im internen Totpunkt bei maximal komprimierter Feder ist die Belastung des Exenternockens am größten. Damit ist auch das Reibungsmoment, mit dem der Motor belastet ist, besonders kritisch.

Für den Anlauf des Einphasensynchronmotors ist es erforderlich, daß er nicht durch Reibungsoder andere Momente im Parallelstand von Rotorfeld und Statorfeld festgehalten wird. In dieser Stellung wird vom Statorstrom kein Moment auf den Rotor ausgeübt. Das magnetische Reluktanzmoment bei stromlosen Motorspulen muß, wenn auf zusätzliche Hilfsmittel verzichtet wird, größer sein als die in der Parallelstellung auftretenden Lastmomente. Es ist bekannt (ETZ 30, 1978, Seiten 56 bis 60), mit Hilfe von mechanischen Starthilfen, wie Feder-Nocken-Anordnungen, den Motor aus der Parallelstellung zu drehen. Dies erfolgt in beiden um 180° verdrehten Positionen des Motors, weil die Periodenlänge des Hilfsmomentes halb so groß ist wie die der Rotorumdrehung und sich deshalb jeweils nach einer halben Rotorumdrehung wiederholt. Im vorliegenden Fall ist ebenfalls ein Federmoment wirksam, welches jedoch bei der gegebenen Exzenteranordnung die gleiche Periodendauer hat wie die Rotorumdrehung. Auch hier läßt sich durch geschickte Anordnung des Federmomentes in bezug auf die Magnetisierungsrichtung des Rotors durch geeignete Wahl der Exzenterpositionierung erreichen, daß der Rotor aus einer der beiden jeweils nach 180° auftretenden Parallelstellungen gedreht wird. In der Umgebung der anderen Parallelstellung wirkt das Federmoment jedoch gegen das Reluktanzmoment und schwächt somit das Gesamtmoment, mit welchem der Rotor aus der Parallelstellung gezogen wird. Daduch wird das gesamte Reibungsmoment, welches der Motor beim Starten überwinden kann, bei dieser Position verkleinert, während es in der anderen Position vergrößert wird.

Diese Problematik wird nach einer weiteren Ausgestaltung der Erfindung dadurch gelöst, daß der Rotor und die Exzenterscheibe derart gegeneinander verstellt sind, daß bei positiver Rotordrehrichtung bei Parallelstellung von Rotor- und Statorfeld, in welcher Parallelstellung auf den Rotor vom Statorfeld kein Drehmoment ausgeübt wird, der Kolben den unteren Totpunkt bereits um einen Winkel durchlaufen hat, der 20 bis 60 Winkelgrade beträgt, wobei die positive Rotordrehrichtung diejenige ist, in der zuerst der mit den Spulen gekoppelte Rotorfluß maximal wird und dann um einen kleinen Winkel verdreht das magnetische Reluktanzmoment, welches der Rotor bei stromlosen Spulen erfährt, gleich Null wird. Dadurch läßt sich ein sicherer Start des Einphasensynchronmotors erreichen.

Nach einer weiteren Augestaltung der Erfindung ist vorgesehen, daß der Exzenter auf einen in Hubrichtung im Pumpengehäuse geführten Schieber einwirkt, der sowohl mit dem im Kolbenraum verschiebbaren Kolben als auch einem Joch verbunden ist, an dem Speicherfedern angreifen, die zwischen dem Joch und dem Pumpengehäuse gespannt sind. Die Einheit aus Schieber, Kolben und Joch ist ein in Spritztechnik wirtschaftlich herstellbares Gebilde, das in das Pumpengehäuse einsteckbar und zusammenbringbar ist und das mittels den als Speicherfedern wirkenden Federn in dem Pumpengehäuse gehalten wird. Besonders einfach ist die Konstruktion, wenn nach einer weiteren Ausgestaltung der Erfindung die Speicherfedern als Zugfedern ausgebildet sind.

Bei einer anderen Ausgestaltung der Erfindung ist vorgesehen, daß der Exzenter auf einen in Hubrichtung im Pumpengehäuse geführten Schieber einwirkt, der pumpenseitig mit dem im Kolbenraum verschiebbaren Kolben versehen ist und abstützseitig über einen Stößel mit einer Druckspeicherfeder zusammenwirkt. Eine solche Druckfeder wirkt zentrischer auf den Schieber. Wenn nach einer weiteren Ausgestaltung dieser Ausführungsform vorgesehen ist, daß sich die Druckspeicherfeder auf der vom Schieber abliegenden Seite an einem Lager abstützt, das in Verschieberichtung des Schiebers verstellbar ist, dann ist die Speicherkraft der Druckfeder einstellbar. Das ganze System läßt sich damit an die Gegebenheiten anpassen.

Nach einer weiteren Ausgestaltung der Erfindung ist vorgesehen, daß der Exzenter in einen quer zur Hubrichtung verlaufenden Längsschlitz des Schiebers eingreift. Auf diese Weise kommt eine unmittelbare Verbindung zwischen dem Exzenter auf der Motorwelle und dem Schieber mit Kolben und Joch oder Stößel zustande.

Nach einer weiteren Ausgestaltung der Erfindung ist vorgesehen, daß für einen Pumpendruck von 12 bar und einen Durchsatz flüssigen Mediums von 0,1 bis 0,25 l/min ein Einphasensynchronmotor von ca. 10 W abgegebener Leistung eingesetzt wird. Mit einem kleinbauenden Einphasensynchronmotor läßt sich damit eine ausreichende Wassermenge mit hohem Druck fördern. Nach einer weiteren Ausgestaltung der Erfindung kommt die Druckpumpe bei Kaffeemaschinen, Espressomaschinen oder Hochdruckreinigern zur Anwendung.

Bei bekannten Espressomaschinen werden zum Antrieb elektromagnetische Schwingsysteme eingesetzt, deren Schwingweite vom durch das System aufgebrachten Gegendruck abhängig ist. Dies hat zur Folge, daß die Fördermenge der Pumpe mit steigendem Druck sinkt und bei hohen Drücken, wie sie bei der Espressozübereitung wünschenswert sind, stark zurückgeht. Die für die Zübereitung einer gewissen Menge des Getränkes erforderliche Zeit ist damit ebenfalls vom Gegendruck, der Kaffeesorte und der Füllmenge abhängig; die Zeit kann deshalb nicht zu Dosierzwecken herangezogen werden. Eine von einem Einphasensynchronmotor angetriebene Druckpumpe hat unabhäng vom Gegendruck eine nahezu konstante Schwingweite. Wenn dafür gesorgt wird, daß auch die Ventilwirkung bei hohen Drücken einwandfrei funktionsfähig bleibt, ist die Fördermenge unabhängig vom Gegendruck.

Nach einer weiteren Ausgestaltung der Erfindung ist deshalb vorgesehen, daß die Betriebszeit der Pumpe zur Bestimmung der geförderten Flüssigkeitsmenge eingesetzt wird. Die Zeit kann so als Maß für die geförderte Menge und damit zu Dosierzwecken eingesetzt werden. Zur Aufrechterhaltung einer einwandfreien Ventilfunktion ist nach einer weiteren Ausgestaltung der Erfindung vorgesehen, daß die Ventile mit steifen beweglichen Ventilkörpern ausgerüstet sind, wobei die Ventilkörper beispielsweise als Kugeln ausgebildet werden können.

Die Druckpumpe wird anhand der Zeichnung näher erläutert. Es zeigen:

Fig. 1 eine Druckpumpe mit Speicherzugfedern,

Fig. 2 eine Druckpumpe mit Speicherdruckfeder,

Fig. 3a und 3b Diagramme zur Erläuterung des Zusammenspiels von zusätzlicher Speicherfeder, Motormoment und Pumpenbelastung.

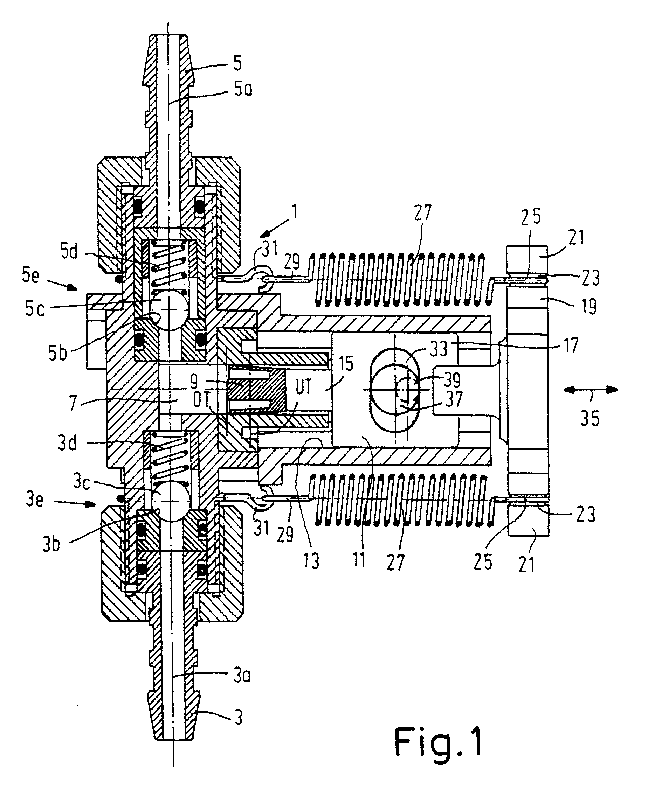

Fig. 1 zeigt ein Pumpengehäuse 1 mit einem Wassereinlaßstutzen 3 und einem Wasserauslaßstutzen 5. Die Wasserführungen 3a und 5a in dem Wassereinlaßstutzen 3 und dem Wasserauslaßstutzen 5 münden an Ventilsitzen 3b und 5b, die mittels Ventilkugeln 3c, 5c verschließbar sind unter Zuhilfenahme von Ventilfedern 3d und 5d. Zwischen den Ventilen 3e und 5e befindet sich ein Kolbenraum 7, in dem ein Kolben 9 in Kompressionsrichtung und in Entspannungsrichtung verschiebbar ist. Der Kolben ist unmittelbar mit einem Schieber 11 verbunden, der in einer Schieberführung 13 in Hubrichtung zusammen mit dem Kolben ver schiebbar ist. Auf der dem Kolbenansatz 15 am Schieber 11 gegenüberliegenden Seite 17 ist am Schieber 11 ein Joch 19 angeordnet. Das Joch 19, der Schieber 11 und der Kolben 9 können aus einem Spritzteil bestehen.

Das Joch 19 weist Ausleger 21 mit Kerben 23 auf, in die Endhaken 25 von Speicherfedern 27 eingehängt sind. Die Endhaken 29 an den anderen Enden der Speicherfedern 27 sind in Spannhaken 31 eingehängt, die am Pumpengehäuse 1 beispielsweise im Bereich der Ventile 3e und 5e angreifen.

In dem Schieber 11 befindet sich ein Querschlitz 33, der quer zu der durch einen Doppelpfeil 35 angegebenen Hubrichtung verläuft. In den Querschlitz 33 greift ein Exzenter 37, der auf der Welle 39 eines nicht dargestellten Einphasensynchronmotors angeordnet ist.

Bei dem Entspannungshub, bei dem der Exzenter 37 den Kolben 9 von den Ventilen 3e, 5e wegzieht, werden die Speicherfedern ausgezogen und damit mit Energie geladen. Beim Kompressionshub in Richtung auf die Ventile 3e, 5e unterstützen die Speicherfedern 27 dann die vom Motor gelieferte Kompressionskraft, wobei das auf den Motor ausgeübte Lademoment des Federenergiespeichers durch eine entsprechende Auslegung der Speicherfedern 27 halb so groß ist wie das beim Kompressionshub ausgeübte Lastmoment. Das Ende des Entspannungshubes ist in Fig. 1 mit dem unteren Totpunkt UT und das Ende des Kompressionshubes ist in Fig. 1 mit dem oberen Totpunkt OT angegeben.

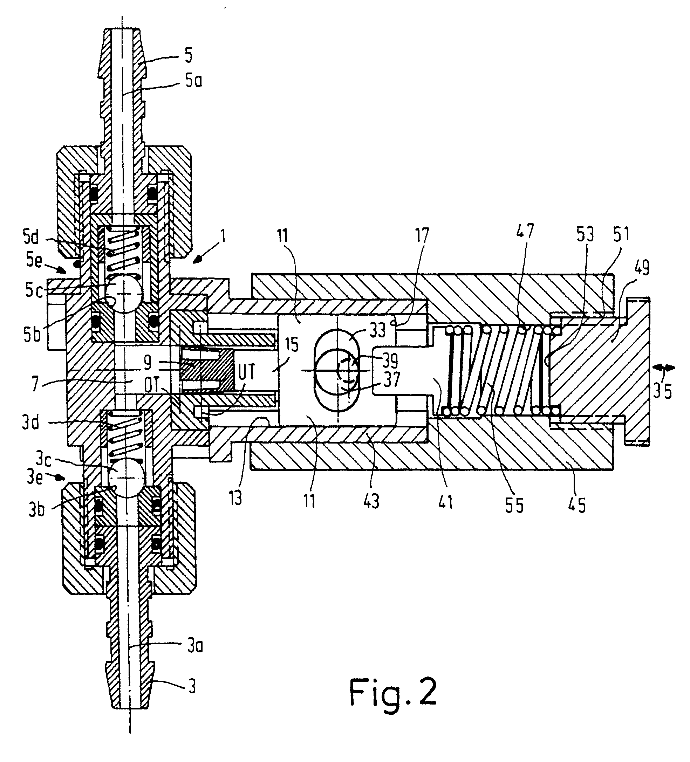

Fig. 2 zeigt wieder das Pumpengehäuse 1 mit einem Wassereinlaßstutzen 3 und einem Wasserauslaßstutzen 5. Gegenüber dem Kolbenraum 7 sind der Wassereinlaßstutzen 3 und der Wasserauslaßstutzen 5 mittels Ventilen 3e und 5e geschlossen. In dem Kolbenraum 7 ist der Kolben 9 verschiebbar, der an dem Schieber 11 pumpenseitig befestigt ist. Der Schieber 11 ist in der Schieberführung 13 verschiebbar mit Hilfe eines in den Querschlitz 33 eingreifenden exzentrischen Nokkens 37. Der Nocken 37 ist exzentrisch angeordnet an der Welle 39 des in der Zeichnung nicht dargestellten Einphasensynchronmotors.

An der Abstützseite 17 ist in den Schieber 11 ein Stößel 41 eingesetzt. Außerdem ist auf den Träger 43 der Führung ein Gegenlagerstutzen 45 aufgesetzt, der eine Federführung 47 und einen Lagerstopfen 49 aufweist, der in ein Gewinde 51 am äußeren Ende des Gegenlagerstutzens 45 einschraubbar ist. Zwischen der innengelegenen Gegenlagerfläche 53 des Gegenlagerstopfens 49 und dem Stößel 41 ist eine Druckfeder 55 vorgesehen. Diese Druckfeder 55 kann durch das Einschrauben des Gegenlagerstopfens 49 zwischen dem Schieber 11 und dem Gegenlagerstopfen 49 auf eine bestimmte Vorspannung gebracht werden.

Die Funktionsweise der Druckpumpe nach Fig. 2 entspricht der der Druckpumpe nach Fig. 1. Bei dem Entspannungshub, bei dann der Exzenter 37 den Kolben 9 von den Ventilen 3e, 5e in Entspannungsrichtung wegzieht, wird die Speicherdruckfeder 55 unter höhere Vorspannung gebracht und damit mit Energie geladen. Beim Kompressionshub in Richtung auf die Ventile 3e, 5e unterstützt die Speicherdruckfeder dann die vom Motor gelieferte Kompressionskraft, wobei das auf den Motor ausgeübte Lademoment des Federenergiespeichers durch eine entsprechende Auslegung der Speicherdruckfeder halb so groß ist, wie das beim Kompressionshub ausgeübte Lastmoment. Durch ein Einstellen bzw. Verstellen des Gegenlagerstopfens 49 läßt sich das Speichermoment einstellen.

Für einen Pumpdruck von etwa 12 bar und einen Durchsatz flüssigen Mediums von 0,1 bis 0,25 l/min läßt sich ein Einphasensynchronmotor von etwa 10 W abgegebener Leistung einsetzen. Ein solcher Motor ist kleinbauend und läßt sich gut in kleinen Haushaltsgeräten, wie beispielsweise Kaffeemaschinen, Espressomaschinen oder Hochdruckreinigern, einsetzen.

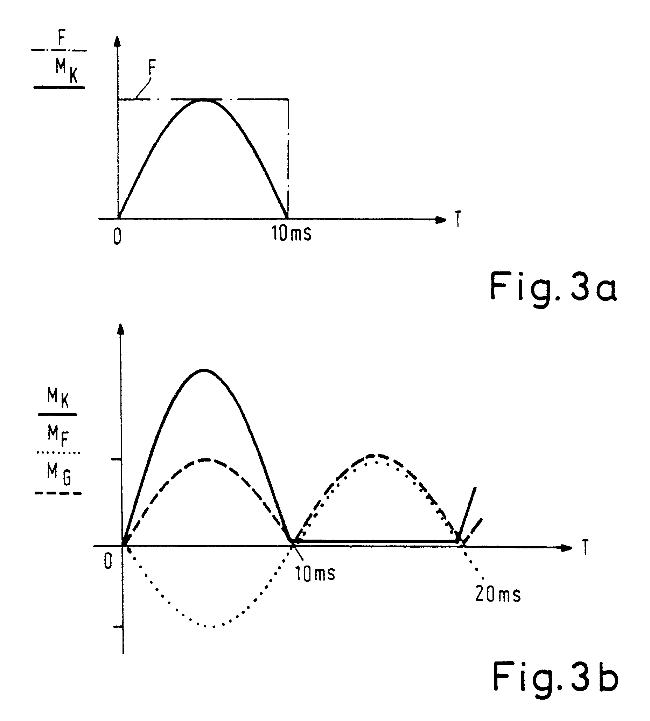

Fig. 3a zeigt ein schematisch vereinfachtes Diagramm, in welchem die Kraft F auf den Kolben (dargestellt in einer strichpunktierten Linie) und das Moment $M_K$ (durchgezogen dargestellt), welches der Motor ohne zusätzlichen Energiespeicher durch den Kolben erfährt, während eines Pumpenzyklusses in Abhängigkeit von der Zeit dargestellt wird. Während der ersten 10 ms wird der Kompressionshub durchlaufen. Die Kraft auf den Kolben bleibt in dieser Zeit wegen der Inkompressibilität des Mediums und dem etwa konstanten Gegendruck auf der Druckseite in etwa konstant. Das Moment, das der Kolben auf den Motor ausübt, ist aufgrund des Exzenterantriebes unter idealen Bedingungen und unter Vernachlässigung der Reibung im unteren Totpunkt bei T = O ms und im oberen Totpunkt bei T = 10 ms, also am Ende des Kompressionshubes gleich Null. In der Zwischenzeit durchläuft es ein Maximum. Während des Ansaughubes, beim Zurückbewegen des Kolbens, in der Zeit zwischen 10 ms und 20 ms fällt der Druck auf den Kolben weg, und das belastende Moment ist gleich Null. Dies führt zu einer sehr ungleichmäßigen Belastung des Motors, die insbesondere für Einphasensynchronmotoren sehr kritisch ist, weil sie zur Anregung von Schwingungen führt, die den Motor außer Tritt fallen und schließlich abkippen lassen.

Fig. 3b zeigt schematisch vereinfacht die Verhältnisse bei Hinzuziehung eines zusätzlichen Energiespeichers entsprechend der Erfindung. Der Energiespeicher, z. B. eine mechanische Feder, ist am Ende eines Saughubes bzw. am Beginn eines Kompressionshubes maximal gespannt und übt auf den Motor während des Kompressionshubes ein Moment $M_F$ aus, welches in Gegenphase zum Kolbenmoment $M_K$ ist und dessen Amplitude etwa halb so groß ist wie die Amplitude des Kolbenmomentes $M_K$. Das insgesamt auf den Motor während der Kompressionsphase wirkende Moment $M_G$ hat eine Amplitude, die gegenüber dem Fall ohne Feder (nach Fig. 3a) ebenfalls auf etwa die Hälfte reduziert ist. Während des Saughubes bleibt lediglich die Wirkung des Federmomentes $M_F$ übrig, so daß sich auch während des Saughubes ein Gesamtmoment $M_G$, welches auf den Motor wirkt, ergibt, welches der Belastung während des Kompressionshubes entspricht. Dadurch wird die einseitige Pulsbelastung während einer halben Umdrehung vermieden, und der Motor gerät nicht ins Schwingen und hat einen ruhigeren Lauf ohne abzukippen.

**Ansprüche**

1. Druckpumpe für fließfähige Medien, insbesondere für Espressomaschinen, bei der die auf einen Kolben wirkende Kraft während eines Pumpzyklusses beim Kompressionshub auf einen Maximalwert ansteigt und bei Saughub sehr gering ist, mit einem als Antriebsmotor dienenden zweipoligen Einphasensynchronmotor, der über eine Umdrehung ein von der Rotorstellung und dem Strom abhängiges, stark wechselndes Motormoment aufweist und der über einen Exzenter (37), der ohne Zwischenschaltung eines Getriebes unmittelbar vom dauermagnetischen Rotor angetrieben wird, den in einem Kolbenraum (7) verschiebbaren Kolben (9) ohne Rückholfeder abwechselnd im Kompressionshub vor und im Entspannungshub zurück bewegt, wobei in der Wand des Kolbenraumes (7) im Pumpengehäuse angeordnete Ein- und Auslaßventile (3e, 5e) für das Medium vorgesehen sind, gekennzeichnet durch ihre Verwendung als Pumpe für höhere Pumpdrücke von 8 bar bis 18 bar, wobei der Motor beim Entspannungshub über den Exzenter einen Energiespeicher (27, 55) lädt und der Energiespeicher beim Kompressionshub den Motor gegen das Kompressionsmoment unterstützt derart, daß die Amplitude des den Motor belastenden Gesamtmomentes, bestehend aus Kolbenmoment und Zusatzmoment des Energiespeichers, während der ersten halben Umdrehung etwa halb so groß ist wie das Moment, das ohne den zusätzlichen Energiespeicher (27, 55) auftreten würde, und während der zweiten halben Umdrehung gleich groß ist wie bei der ersten halben Umdrehung, so daß die während einer Umdrehung auftretende Wechselbelastung auf den Einphasensynchronmotor auf etwa die Hälfte reduziert wird bei gleichbleibender mittlerer Leistung.

2. Druckpumpe nach Anspruch 1, dadurch gekennzeichnet, daß der Rotor und die Exzenterscheibe (37) derart gegeneinander verstellt sind, daß bei positiver Rotordrehrichtung bei Parallelstellung von Rotor- und Statorfeld, in welcher Parallelstellung auf den Rotor vom Statorfeld kein Drehmoment ausgeübt wird, der Kolben den unteren Totpunkt (UT) bereits um einen Winkel durchlaufen hat, der 20 bis 60 Winkelgrade beträgt, wobei die positive Rotordrehrichtung diejenige ist, in der zuerst der mit den Spulen gekoppelte Rotorfluß maximal wird und dann um einen kleinen Winkel verdreht das magnetische Reluktanzmoment, welches der Rotor bei stromlosen Spulen erfährt, gleich Null wird.

3. Druckpumpe nach Anspruch 1, dadurch gekennzeichnet, daß der Exzenter (37) auf einen in Hubrichtung im Pumpengehäuse (1) geführten Schieber (11) einwirkt, der sowohl mit dem im Kolbenraum (7) verschiebbaren Kolben (9) als auch mit einem Joch (19) verbunden ist, an dem Speicherfedern (27) angreifen, die zwischen dem Joch (19) und dem Pumpengehäuse (1) gespannt sind.

4. Druckpumpe nach Anspruch 3, dadurch gekennzeichnet, daß die Speicherfedern Zugfedern (27) sind.

5. Druckpumpe nach Anspruch 1, dadurch gekennzeichnet, daß der Exzenter (37) auf einen in Hubrichtung im Pumpengehäuse (1) geführten Schieber (11) einwirkt, der pumpenseitig (15) mit dem im Kolbenraum (7) verschiebbaren Kolben (9) versehen ist und abstützseitig (17) über einen Stößel (41) mit einer Druckspeicherfeder (55) zusammenwirkt.

6. Druckpumpe nach Anspruch 5, dadurch gekennzeichnet, daß sich die Druckspeicherfeder (55) auf der vom Schieber (11) abliegenden Seite an einem Lager (49) abstützt, das in Verschieberichtung des Schiebers (11) verstellbar ist.

7. Druckpumpe nach Anspruch 3 oder 5, dadurch gekennzeichnet, daß der Exzenter (37) in einem quer zur Hubrichtung verlaufenden Längsschlitz (33) des Schiebers (11) eingreift.

8. Druckpumpe nach Anspruch 1, dadurch gekennzeichnet, daß für einen Pumpendruck von 12 bar und einen Durchsatz flüssigen Mediums von 0,1 bis 0,25 l/min ein Einphasensynchronmotor von ca. 10 W abgegebener Leistung eingesetzt wird.

9. Druckpumpe nach Anspruch 1, dadurch gekennzeichnet, daß die Druckpumpe bei Kaffeemaschinen, Espressomaschinen oder Hochdruckreinigern zur Anwendung kommt.

10. Druckpumpe nach Anspruch 1 oder 9 mit den Einlaß und den Auslaß des fließfähigen Mediums aus dem Kolbenraum regelnden Ventilen, dadurch gekennzeichnet, daß die Ventile (3e, 5e) mit steifen beweglichen Ventilkörpern ausgerüstet sind.

11. Druckpumpe nach Anspruch 10, dadurch gekennzeichnet, daß die Ventilkörper als Kugeln ausgebildet sind.

12. Druckpumpe nach einem der Ansprüche 1 bis 11, dadurch gekennzeichnet, daß die Betriebszeit der Pumpe zur Bestimmung der geförderten Flüssigkeitsmenge eingesetzt wird.

Fig.1

Fig.2

Fig.3a

Fig.3b